# EUROPÄISCHE PATENTSCHRIFT

(11) **EP 1 063 152 B1**
(45) Veröffentlichungstag und Bekanntmachung des Hinweises auf die Patenterteilung: **01.12.2004**
(21) Anmeldenummer: 00112224.1
(22) Anmeldetag: 07.06.2000
(51) Int. Cl.: B62D 49/08, B60K 1/04, B60K 17/12, B60K 17/28, B60K 7/00

(54) **Arbeitsfahrzeug**
Working vehicle
Véhicule utilitaire

(30) Priorität: 22.06.1999 DE 19928471
(43) Veröffentlichungstag der Anmeldung: 27.12.2000
(73) Patentinhaber: DEERE & COMPANY, Moline, Illinois 61265-8098 (US)
(72) Erfinder: Weiss, Heinz, 64625 Bensheim (DE)
(74) Vertreter: Lau-Loskill, Philipp, Dipl.-Phys.

(56) Entgegenhaltungen:
- DE-A- 3 000 696
- DE-A- 3 134 258
- DE-A- 19 846 000
- DE-C- 964 907
- FR-A- 1 285 451

## Beschreibung

Die Erfindung betrifft ein Arbeitsfahrzeug, insbesondere einen landwirtschaftlichen Traktor, mit einer elektrischen Energiequelle, die wenigstens einen das Arbeitsfahrzeug antreibenden Elektromotor speist.

Durch die EP-A-0 864 457 ist ein derartiges Antriebssystem für Nutzfahrzeuge bekannt geworden, bei dem ein Verbrennungsmotor einen Generator antreibt. Der Generator liefert die elektrische Energie für Elektromotoren, welche jeweils eines der Fahrzeugräder antreiben.

Bei Nutzfahrzeugen, insbesondere bei landwirtschaftlichen Traktoren, ist die Gewichtsverteilung auf die Fahrzeugachsen oder -räder von großer Bedeutung für optimale Traktionsbedingungen, guten Bodenkontakt und zur Steigerung der Produktivität. Es ist üblich, durch Zusatzlasten die gestellten Anforderungen zu erfüllen.

Es ist bekannt, durch Verschiebung eines Zusatzgewichtes in Fahrzeuglängsrichtung und in Fahrzeugquerrichtung den Schwerpunkt des Arbeitsfahrzeuges zu verlagern. Hierfür wurde durch die DE 29 27 736 A1 für ein konventionell mit Verbrennungsmotor und mechanischem Antriebsstrang ausgerüstetes Zugfahrzeug eine Vorrichtung zur Verteilung des Fahrzeuggewichts vorgeschlagen, die eine unter dem Fahrzeugrumpf montierbare, sich in Fahrzeuglängsrichtung erstreckende Platte enthält, welche als Zusatzlast dient. Die Platte läßt sich horizontal in Fahrzeuglängsrichtung und in Fahrzeugquerrichtung durch Hydraulikzylinder verschieben, um die axiale Position der Zusatzlast auf unterschiedliche Traktionskräfte und Geländebeschaffenheiten anzupassen und die Bodenhaftung und die Stabilität des Zugfahrzeugs zu erhöhen. Zur Ansteuerung der Hydraulikzylinder ist ein Hydraulikverteiler vorgesehen, der auf eine bestimmte Verringerung einer Achslagerlast anspricht. In der EP-A-0 182 229, der EP-A-0 383 279 und der DE-A-32 23 990 werden weitere Möglichkeiten zur Verschiebung von Zusatzgewichten beschrieben.

Nachteilig bei den bekannten Lösungen ist es, daß zur Einstellung der Gewichtsverteilung Zusatzgewichte verwendet werden, die das Gesamtgewicht des Arbeitsfahrzeuges erhöhen.

Die der Erfindung zugrunde liegende Aufgabe wird darin gesehen, ein Arbeitsfahrzeug mit elektrischem Antrieb der eingangs genannten Art anzugeben, bei dem unter Vermeidung der vorgenannten Probleme die Traktionsbedingungen durch geeignete Ballastierung verbessert werden. Insbesondere soll es möglich sein, eine gewünschte Lastverteilung auf die Räder vorzunehmen, ohne daß durch Verwendung von Zusatzgewichten das Fahrzeuggesamtgewicht unnötig erhöht wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß dient wenigstens ein Bauteil der Energiequelle neben seiner originären Bestimmung als Ballastgewicht und ist in Fahrzeuglängsrichtung verschiebbar angeordnet. Hierdurch läßt sich die Lastverteilung auf die Räder an gewünschte Anforderungen anpassen, ohne daß Zusatzlasten erforderlich sind. Es kann somit ein relativ leichtes Arbeitsfahrzeug mit optimaler Zulademöglichkeit und guter Bodenschonung bereitgestellt werden.

Durch die Optimierung der Lastverteilung auf die Achsen oder Räder lassen sich die Traktionsbedingungen des Arbeitsfahrzeuges erheblich verbessern, wodurch sich dessen Produktivität und Arbeitsgeschwindigkeit im Feld steigern und hohe Transportgeschwindigkeiten auf der Straße erreichen lassen. Es wird somit ein vielfältiger Einsatz des Arbeitsfahrzeuges unter jeweils optimalen Bedingungen möglich. Beispielsweise kann das Arbeitsfahrzeug im Feld eine Arbeitsgeschwindigkeit von 25 km/h und mehr und auf der Straße eine Transportgeschwindigkeit von bis zu 80 km/h erreichen.

Dies kommt der Forderung nach steigender Transportkapazität entgegen.

Gemäß einer bevorzugten Ausgestaltung der Erfindung kommt als Energiequelle, deren Komponenten verschiebbar auf dem Arbeitsfahrzeug angeordnet sind, ein Verbrennungsmotor und ein an den Verbrennungsmotor gekoppelter Generator in Betracht. Der Rotor des Generators kann antriebsmäßig direkt mit der Kurbelwelle des Verbrennungsmotors verbunden sein. Der Generator liefert den Strom für wenigstens einen das Arbeitsfahrzeug antreibenden Elektromotor und elektrische Nebenverbraucher. Wenigstens der Verbrennungsmotor oder der Generator, vorzugsweise jedoch beide, sind in Fahrzeuglängsrichtung verschiebbar angeordnet. Vorzugsweise enthält jedes Fahrzeugrad einen durch den Generator gespeisten elektrischen Radmotor.

Die Erfindung eignet sich auch besonders für elektrisch angetriebene Arbeitsfahrzeuge, bei denen die elektrische Energiequelle wenigstens eine Brennstoffzelle enthält. Die Brennstoffzelle läßt sich hierbei zur Einstellung der Lastverteilung in Fahrzeuglängsrichtung verschieben.

Insbesondere für den landwirtschaftlichen Einsatz ist es von Vorteil, wenn das Arbeitsfahrzeug wenigstens eine angetriebene Zapfwelle aufweist. Hierfür schlägt eine zweckmäßige Weiterbildung der Erfindung vor, daß ein mit einem Zapfwellenantrieb in Verbindung stehendes Antriebsrad vorgesehen ist, welches von dem Verbrennungsmotor oder von einem durch eine Brennstoffzelle gespeisten Elektromotor angetrieben wird. Vorzugsweise steht der zapfwellenantrieb über zugehörige Zapfwellenkupplungen mit einer Heckzapfwelle und/oder mit einer Frontzapfwelle in Verbindung.

Um die Ausballastierung zu erleichtern, schlägt eine weitere bevorzugte Ausgestaltung der Erfindung eine Ausschiebevorrichtung vor, die gegenüber dem Fahrzeugrumpf verschiebbar ist und die ein am Fahrzeugrumpf geführtes, verschiebbares Tragteil enthält. Die Ausschiebevorrichtung, insbesondere das Tragteil, trägt die verschiebbaren Komponenten der Energiequelle unmittelbar oder durch Zwischenschaltung weiterer Bauelemente mittelbar.

Die Ausschiebevorrichtung enthält vorzugsweise ein im wesentlichen im Querschnitt rechteckiges oder quadratisches als Tragteil dienendes Tragrohr, das in einem entsprechenden fahrzeugfesten Führungsrohr verschiebbar geführt ist. Diese Führung kann beispielsweise nach dem von Teleskopladern (US-Re. 30,021) bekannten Prinzip ausgebildet sein.

Eine bevorzugte Weiterbildung der Erfindung sieht vor, daß am Tragteil, insbesondere im Bereich eines Endes des Tragteils, ein Getriebegehäuse befestigt ist, an das der Verbrennungsmotor und/oder der Generator angeflanscht sind.

Hierbei ist das Getriebegehäuse beispielsweise als Zwischengehäuse ausgebildet und schließt einen Zapfwellenantrieb ein. Auf einer Seite des Zwischengehäuses kann der Verbrennungsmotor und auf der anderen Seite kann der Generator angeflanscht werden, wobei die Ausgangswelle, insbesondere die Kurbelwelle, des Verbrennungsmotors ein in dem Zwischengehäuse angeordnetes Antriebsrad und den Generator antreibt. Der Generator liefert den Strom für die das Arbeitsfahrzeug antreibenden Elektromotoren sowie gegebenenfalls für weitere elektrische Verbraucher. Das Antriebsrad steht mit einem Zapfwellenantrieb in Verbindung.

Bei im Bereich der Fahrzeugfrontseite angeordnetem Zwischengehäuse ist es von Vorteil, wenn der Verbrennungsmotor hinter dem Zwischengehäuse derart angeordnet ist, daß seine Ausgangswelle nach vorn in Richtung Zwischengehäuse weist. Der Verbrennungsmotor ist somit gegenüber konventionellen Fahrzeugen um 180° gedreht. Falls ein üblicher Verbrennungsmotor verwendet wird, können dessen für das Schwungradgehäuse dienenden Bohrungen im vorliegenden Anwendungsfall zur Befestigung am Zwischengehäuse genutzt werden. Ausgehend vom Zwischengehäuse kragt nach hinten der Verbrennungsmotor und nach vorne der Generator vor.

Alternativ oder ergänzend zur Verwendung eines Verbrennungsmotors mit Generator kann als Energiequelle wenigstens eine Brennstoffzelle dienen. In diesem Fall kann am Zwischengehäuse eine nach hinten vorkragende Brennstoffzelle und/oder ein durch die Brennstoffzelle gespeister nach vorn vorkragender Elektromotor montiert werden. Der Elektromotor treibt vorzugsweise ein in dem Zwischengehäuse angeordnetes Antriebsrad (Teil einer Räderkette für den Zapfwellenantrieb) an. Der Elektromotor ist beispielsweise ein Drehstrommotor, der über einen Inverter Strom von der Brennstoffzelle erhält, wobei der Inverter den Gleichstrom der Brennstoffzelle in Drehstrom umwandelt.

Gemäß einer bevorzugten Weiterbildung der Erfindung ist im Zwischengehäuse ein Antriebsrad gelagert ist, das antriebsmäßig mit der Kurbelwelle des Verbrennungsmotors oder mit der Ankerwelle eines durch die Brennstoffzelle gespeisten Elektromotors verbunden ist, und das seinerseits ein mit einem Zapfwellenantrieb verbundenes Abtriebsrad und gegebenenfalls den Rotor eines Generators treibt.

Für eine Ballastierung des Arbeitsfahrzeuges kann es zweckmäßig sein, ein oder mehrere am Tragteil und/oder am Getriebegehäuse befestigbare Zusatzgewichte vorzusehen.

Es ist von besonderem Vorteil, an dem Tragteil und/oder dem Getriebegehäuse eine die Energiequelle und weitere Bauteile, insbesondere den Verbrennungsmotor oder die Brennstoffzelle, wenigstens teilweise abdeckende Abdeckhaube zu befestigen, welche sich mit einem fahrzeugfesten Haubenabschnitt überlappt, um im gesamten Verschiebebereich des Tragteils die Energiequelle und andere Bauteile einzuschließen und gegen Umgebungseinflüsse, wie Nässe und Staub, zu schützen.

Sofern die Zapfwellen nicht unmittelbar durch Elektromotoren angetrieben werden, sieht eine vorteilhafte Ausgestaltung der Erfindung vor, das Tragteil hohl auszubilden. Innerhalb des Tragteils erstreckt sich ein teleskopierbarer Zapfwellenstrang in Fahrzeuglängsrichtung. Der raumsparend angeordnete und gegen Umgebungseinflüsse geschützte Zapfwellenstrang wird durch das von dem Verbrennungsmotor bzw. dem Elektromotor angetriebene Antriebsrad angetrieben. Der Zapfwellenstrang steht über Zapfwellenkupplungen, die an den Enden des Tragteils bzw. des Führungsrohrs angeordnet sein können, mit einer Frontzapfwelle und/oder einer Heckzapfwelle in Verbindung. Der Zapfwellenstrang ist jeweils einenends am Arbeitsfahrzeug und anderenends an dem Tragteil gelagert. Um eine Verschiebung des Tragteils gegenüber dem Fahrzeugrumpf zu ermöglichen, besteht der Zapfwellenstrang aus wenigstens zwei in Fahrzeuglängsrichtung relativ zueinander verschiebbaren Abschnitten, die vorzugsweise teleskopartig ineinandergreifen, wobei die Verbindung für eine Drehmomentübertragung ausgelegt ist.

Um die gewünschte Achsverteilung einstellen zu können, ist ein ausreichender Verschiebeweg der verschiebbaren Bauteile, insbesondere des Tragteils, gegenüber dem Fahrzeugrumpf erforderlich. Es ist von Vorteil, daß sich das Tragteil um 0,5 m bis 1,5 m, vorzugsweise um etwa 1,0 m in Fahrzeuglängsrichtung verschieben läßt.

Die Verschiebung läßt sich vorzugsweise durch wenigstens ein hydraulisches oder elektrisches Stellglied vornehmen. Das Stellglied ist in vorteilhafter Weise durch ein manuell einstellbares Steuersignal ansteuerbar. Alternativ oder ergänzend hierzu kann auch gemäß einer bevorzugten Ausgestaltung der Erfindung eine automatische Ansteuerung des Stellglieds in Abhängigkeit der Fahrzeugbelastung und insbesondere der Achsbelastungen erfolgen, so daß in besonders vorteilhafter Weise während des Arbeitseinsatzes eine automatische Nachstellung der Lastverteilung und eine Ausbalancierung der Fahrzeugachse ohne Verwendung zusätzlicher Ballastgewichte erfolgen kann, wodurch eine automatische Anpassung an sich ändernde Fahr- und Traktionsbedingungen vorgenommen wird.

Vorzugsweise wird die automatische Verschiebung adaptiv so lange vorgenommen, bis sich eine gewünschte, insbesondere durch die Bedienungsperson voreinstellbare, Achslastverteilung ergibt.

Die Erfindung eignet sich in besonders vorteilhafter Weise für Arbeitsfahrzeuge, bei denen jedem Rad wenigstens einer Fahrzeugachse ein Elektromotor zugeordnet ist, der durch die Energiequelle gespeist wird. Beispielsweise werden alle vier Räder eines Arbeitsfahrzeuges durch elektrische Einzelradantriebe angetrieben.

Die Drehzahlen und Belastungen von elektrischen Einzelradantrieben lassen sich in vorteilhafter Weise sensorlos, d. h. ohne die Verwendung spezieller Sensoren, aus dem jeweiligen Leistungsaufnahmesignal des Elektromotors ableiten. Einer bevorzugten Weiterbildung der Erfindung zufolge werden daher die Drehzahlen und/oder Radlasten und/oder Momente der das Arbeitsfahrzeug antreibenden Elektromotoren sensorlos erfaßt, um für eine vorgegebene Achslastverteilung den Verstellweg zur Verschiebung des als Ballastgewicht dienenden verschiebbaren Bauteils zu berechnen und anzusteuern bzw. einzuregeln. Die Verschiebung soll dabei derart erfolgen, daß bei statisch oder dynamisch auftretenden Gewichtsverlagerungen an den Achsen oder Rädern des Arbeitsfahrzeuges weitgehend gleiche Radlasten und Momente aufrechterhalten werden. Dabei wird auch das dynamische Verhalten des Arbeitsfahrzeuges, insbesondere die dynamischen Belastungen und Momente der Räder, in die Steuerung einbezogen, wodurch sich das Fahrverhalten des Arbeitsfahrzeuges optimieren läßt.

Bei dem erfindungsgemäßen Arbeitsfahrzeug handelt es sich in vorteilhafter Weise um einen Systemtraktor mit in etwa gleich großen Rädern, dessen Kabine in der Mittenlage angeordnet ist.

Bei derartigen Systemtraktoren lassen sich beispielsweise für unterschiedliche Einsatzfälle gleiche Radlasten an allen Fahrzeugrädern einstellen. Es ist beispielsweise auch möglich, im statischen Zustand ohne Aufsattellast ein Sollgewicht von 60 % auf der Vorderachse und von 40 % auf der Hinterachse zu erreichen. Die gewünschte Lastverteilung läßt sich auch bei durch Aufsattelgeräte verursachten Aufsattellasten oder bei unterschiedlichen Zugwiderständen der Geräte aufrechterhalten. Bei dynamischen Einsätzen ist eine Lastverteilung von ungefähr 50 % zu 50 % vorteilhaft.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den schematischen Längsschnitt durch ein erfindungsgemäßes Arbeitsfahrzeug,
- Fig. 2: einen Längsschnitt gemäß Fig. 1 mit ausgefahrenem Ballastgewicht,
- Fig. 3: den schematischen Längsschnitt durch ein alternatives erfindungsgemäßes Arbeitsfahrzeug,
- Fig. 4: einen Längsschnitt gemäß Fig. 3 mit ausgefahrenem Ballastgewicht und
- Fig. 5: die schematische Aufsicht auf Teilbereiche des Fahrantriebs und einer Lastverteilungssteuerung für ein Fahrzeug gemäß der Figuren 1 bis 4.

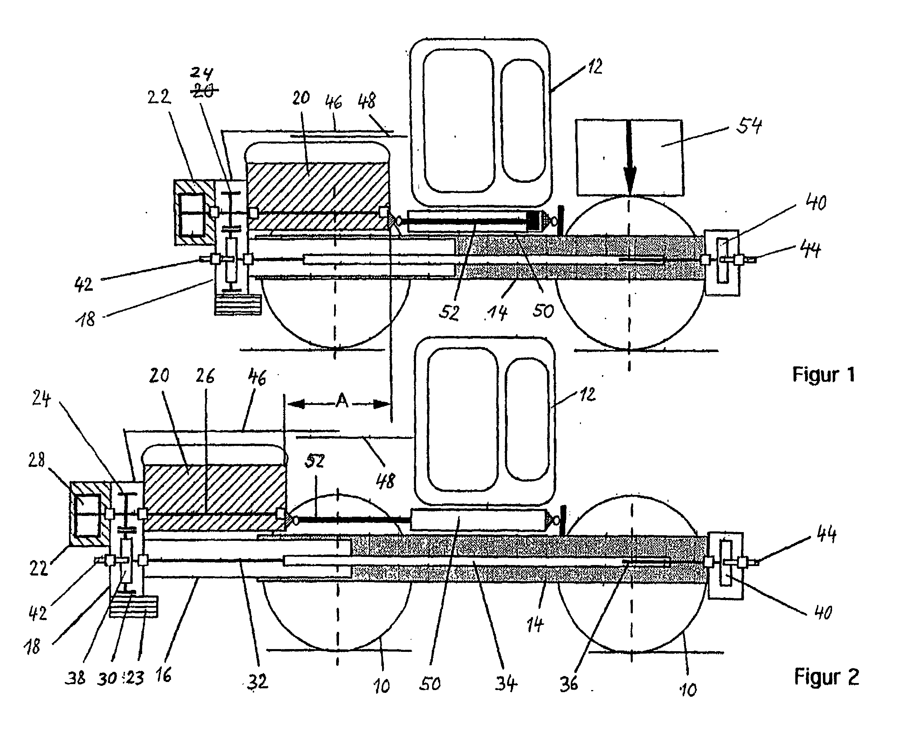

Bei dem in Fig. 1 und 2 dargestellten Arbeitsfahrzeug handelt es sich um einen elektrisch angetriebenen Systemtraktor mit in etwa gleich großen Rädern 10, die jeweils durch einen Elektromotor angetrieben werden. Die Fahrzeugkabine 12 ist in einer Mittenlage auf einem nicht näher dargestellten Chassisrahmen angeordnet.

In Fahrzeuglängsrichtung erstreckt sich ein Zentralrohr oder Führungsrohr 14 mit quadratischem Querschnitt, in dem ein quadratisches Tragrohr 16 längsverschiebbar geführt ist. Die Ausbildung und Führung des Führungsrohres 14 und des Tragrohres 16 entsprechen im wesentlichen den Teleskoparmen bekannter Teleskoplader.

Am Ende des Tragrohres 16, das an der Fahrzeugvorderseite aus dem Führungsrohr 14 herausragt, ist ein Getriebegehäuse 18 befestigt. Oberhalb des Tragrohres 16 ist an einer rückseitigen Flanschfläche des Getriebegehäuses 18 ein Verbrennungsmotor 20 angeflanscht. Bei dem Verbrennungsmotor 20 handelt es sich um eine Komponente, die sich auch bei üblichen, mechanisch angetriebenen Traktoren verwenden läßt. Zur Befestigung des Verbrennungsmotors 20 an der Flanschfläche des Getriebegehäuses 18 dienen nicht näher dargestellte Bohrungen, die üblicherweise für die Befestigung eines Schwungradgehäuses herangezogen werden. Der Verbrennungsmotor 20 kragt ausgehend vom Getriebegehäuse 18 nach hinten freitragend vor und wird nur vom Tragrohr 16 getragen.

Auf der hinsichtlich des Verbrennungsmotors 20 gegenüberliegenden, zur Fahrzeugvorderseite weisenden Seite des Getriebegehäuses 18 ist ein Generator 22 angeflanscht, der sich ebenso wie der Verbrennungsmotor 20 ausschließlich über das Getriebegehäuse 18 am Tragrohr 16 abstützt, welches die Gewichtskräfte über das Führungsrohr 14 in das Fahrzeugchassis einleitet. Der Generator 22 liefert den elektrischen Strom für die elektrischen Einzelradantriebsmotoren und weitere, nicht näher dargestellte elektrische Verbraucher des Arbeitsfahrzeuges.

Des weiteren sind an der Unterseite des Getriebegehäuses 18 mehrere plattenförmige Zusatzgewichte 23 auf übliche Weise derart befestigt, daß sie sich relativ rasch montieren und wieder demontieren lassen.

Innerhalb des Getriebegehäuses 18 ist ein Antriebsrad 24 gelagert, welches einerseits drehfest mit der Kurbelwelle 26 des Verbrennungsmotors 20 und andererseits drehfest mit dem Rotor 28 des Generators 22 verbunden ist, so daß der Verbrennungsmotor 20 sowohl das Antriebsrad 24 als auch den Generator 22 antreibt.

Das Antriebsrad 24 kämmt mit einem drehfest mit einem Zapfwellenstrang verbundenen Zahnrad 30. Der Zapfwellenstrang besteht aus teleskopartig ineinander steckbaren Bauteilen 32, 34, 36 (Wellen und Hohlwellen). Die teleskopischen Verbindungen zwischen den Bauteilen 32, 34, 36 ermöglichen die Übertragung der erforderlichen Zapfwellendrehmomente und sind derart ausgebildet, daß sich die Bauteile 32, 34, 36 in Längsrichtung relativ zueinander verschieben lassen und sich der Zapfwellenstrang somit verlängern bzw. zusammenschieben läßt. Der Zapfwellenstrang 32, 34, 36 treibt über zugehörige Zapfwellenkupplungen 38, 40 eine Frontzapfwelle 42 und eine Heckzapfwelle 44 an.

An dem Getriebegehäuse 18 ist des weiteren eine Abdeckhaube 46 befestigt, die nach hinten überkragt und den Bereich des Verbrennungsmotors 20 vollständig abdeckt. Die Abdeckhaube 46 überlappt mit einem am Fahrzeugchassis oder an der Fahrzeugkabine 12 befestigten Haubenabschnitt 48, so daß bei Längsverschiebung der Verbrennungsmotorbereich gegenüber der Umgebung abgeschirmt bleibt.

Unterhalb der Fahrzeugkabine 12 ist ein hydraulisches Stellglied in Form eines Hydraulikzylinders 50 dargestellt. An Stelle des dargestellten Hydraulikzylinders 50 können auch zwei seitlich angeordnete, parallel wirkende Hydraulikzylinder oder andere hydraulische oder elektrische Stellglieder verwendet werden.

Der Hydraulikzylinder ist mit seinem Zylinder am Fahrzeugchassis und mit seinem ausfahrbaren Kolben 52 am Verbrennungsmotor 20 gelenkig verbunden. Er dient dem Verschieben der verschiebbaren Bauteile, die im wesentlichen aus dem Verbrennungsmotor 20, dem Generator 22, dem Getriebegehäuse 18 mit Zusatzgewichten 23 und dem Tragrohr 16 bestehen.

Gemäß Fig. 1 ist der Kolben 52 vollständig eingefahren. Die verschiebbaren Bauteile nehmen hierbei eine Grenzlage ein, in der sie sich soweit wie möglich der Fahrzeugmitte genähert haben. Dies hat zur Folge, daß sich bei ruhendem, Arbeitsfahrzeug, dessen Hinterachse mit einer Aufsattellast 54 von beispielsweise 1200 kg belastet ist, das Fahrzeuggewicht in etwa in gleichen Teilen auf die Vorderachse und die Hinterachse verteilt.

Gemäß Fig. 2 ist der Kolben 52 des Hydraulikzylinders 50 vollständig ausgefahren. Die Masse der verschiebbaren Bauteile ist hierbei weit nach vorn von der Fahrzeugmitte weg verschoben, so daß die Vorderachse verstärkt belastet wird. Das Fahrzeuggewicht verteilt sich hierbei beispielsweise mit 70 % auf die Vorderachse und mit 30 % auf die Hinterachse, wenn die Hinterachse nicht mit einer Aufsattellast belastet ist.

Der maximal mögliche Verschiebeweg ist mit A gekennzeichnet. Er beträgt je nach Fahrzeugtyp beispielsweise 0,5 m bis 1,5 m, vorzugsweise ungefähr 1 m.

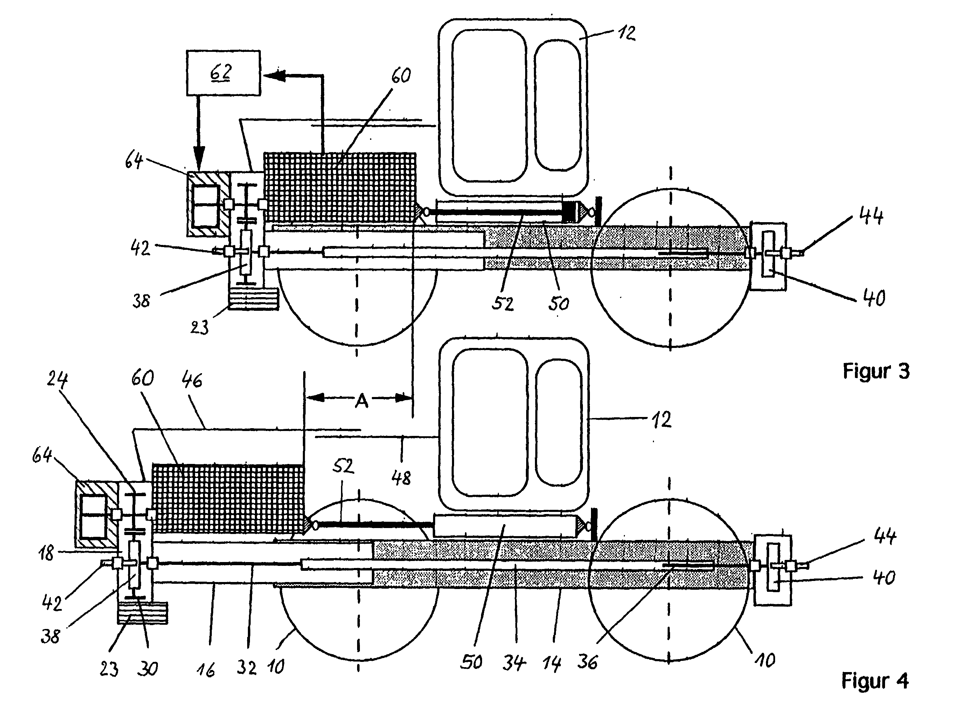

Die Figuren 3 und 4 zeigen ein alternatives Arbeitsfahrzeug, das sich von dem in den Fig. 1 und 2 dargestellten im wesentlichen lediglich durch die Ausbildung der Energiequelle unterscheidet. Gleiche oder sich entsprechende Bauteile sind in den Figuren 1 bis 4 mit denselben Bezugsziffern belegt.

Bei dem in den Figuren 3 und 4 dargestellten Arbeitsfahrzeug ist an der Rückseite des Getriebegehäuses 18 oberhalb des Tragrohres 16 freitragend eine Brennstoffzelle 60 befestigt, die die elektrische Energie für die elektrischen Einzelradantriebsmotoren und weitere elektrische Verbraucher des Arbeitsfahrzeuges liefert. Die Brennstoffzelle 60 liefert auch Strom an einen Inverter 62, der den Gleichstrom der Brennstoffzelle 60 in einen Wechselstrom zum Antrieb eines elektrischen Zapfwellenmotors 64 umwandelt. Der Zapfwellenmotor 64 ist auf der Vorderseite des Getriebegehäuses 18 befestigt und treibt das Antriebsrad 24 und den Zapfwellenstrang 32, 34, 36 an.

Der in den Figuren 1 bis 4 dargestellte Hydraulikzylinder 50, der gemäß Fig. 3 und 4 einerseits an dem Fahrzeugchassis und andererseits an der Brennstoffzelle 60 angreift, wird durch eine Hydrauliksteuereinrichtung angesteuert. Die Achsbelastungen können durch nicht näher dargestellte, geeignete, übliche Sensoren ermittelt werden und mit durch die Bedienungsperson vorgebbaren Werten verglichen werden. Abweichungen zwischen den tatsächlichen und den vorgegebenen Achsbelastungen werden in Steuersignale umgesetzt, durch welche die Kolbenstange 52 des Hydraulikzylinders 50 und mit ihm die beweglichen Bauteile entsprechend ein- oder ausgefahren werden. Es handelt sich um eine von der Bedienungsperson ein- oder ausschaltbare Regelung, die auch während des Arbeitseinsatzes des Arbeitsfahrzeuges wirksam sein kann.

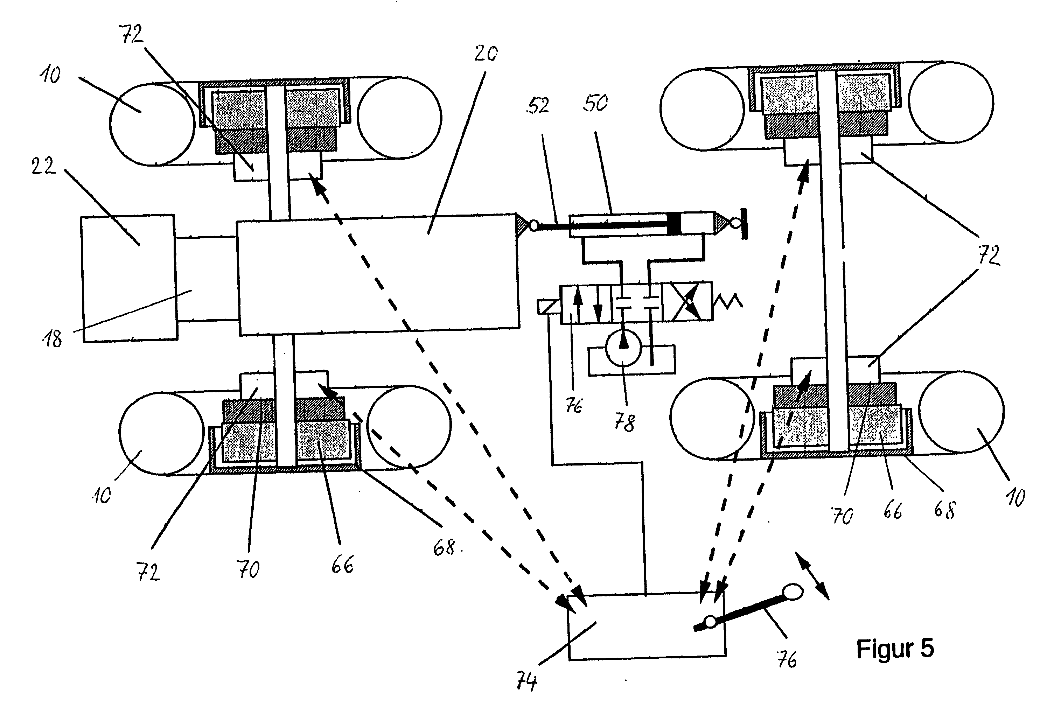

In Figur 5 ist eine bevorzugte Steuereinrichtung zur Steuerung der Verschiebung der verschiebbaren Bauteile dargestellt. Jedes Rad 10 wird durch einen von dem Generator 22 oder der Brennstoffzelle 60 gespeisten Elektromotor, der einen achsfesten Stator 66 und einen mit dem Rad 10 verbundenen Außenläufer oder Rotor 68 enthält, angetrieben. Jedes Rad 10 enthält darüber hinaus einen Frequenzrichter 70 und einen der Ansteuerung dienenden Mikrokontroller 72. Die Mikrokontroller 72 der vier Räder 10 tauschen über nicht näher dargestellte Bus-Leitungen Daten mit einer elektrischen Steuereinheit 74 aus.

Die Steuereinheit 74 steht des weiteren mit einem elektromagnetisch ansteuerbaren Hydraulikventil 76 in Verbindung, welches entsprechend den Steuersignalen der Steuereinheit 74 die Kammern des Hydraulikzylinders mit einer Hydraulikdruckquelle 78 oder dem Sumpf verbinden, um den Kolben 52 des Hydraulikzylinders in gewünschter Weise zu bewegen.

Die Bedienungsperson kann über einen Bedienungshebel 76 eine gewünschte Fahrgeschwindigkeit an die Steuereinheit 74 vorgeben. Die Steuereinheit 74 kommandiert dementsprechende gleiche Geschwindigkeiten an die Mikrokontroller 72 der einzelnen Räder 10. Die Mikrokontroller 72 stellen die entsprechenden Raddrehzahlen an den Frequenzumrichtern 70 ein. Entsprechend den unterschiedlichen Belastungen infolge der jeweiligen Anbaugeräte und Fahrbedingungen stellen sich unterschiedliche Raddrehmomente ein. Diese werden von den Mikrokontrollern 72 erfaßt und der Steuereinheit 74 zurückgemeldet. Die Raddrehmomente der Vorderräder und der Hinterräder werden aufsummiert und ins Verhältnis gestellt. Diese Prozentzahl entspricht dem Wert, um welchen die Verschiebeeinrichtung verschoben werden muß, so daß die Steuereinheit 74 entsprechende Signale an das Hydraulikventil 76 abgibt.

Da auf der Vorderachse schwerere Lasten ruhen als auf der Hinterachse, setzt sich der Prozeß erst in Gang, wenn sich die Verhältniszahl von einem Anfangswert von beispielsweise 60/40 (vorn/hinten) zu größeren Werten verschiebt. Für Straßenfahrt muß das Verfahren aus Sicherheitsgründen ausgeschaltet werden.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die in den Ansprüchen definierte Erfindung fallen.

## Patentansprüche

1. Arbeitsfahrzeug, insbesondere landwirtschaftlicher Traktor, mit einer elektrischen Energiequelle, die wenigstens einen das Arbeitsfahrzeug antreibenden Elektromotor speist, **dadurch gekennzeichnet, daß** wenigstens ein Bauteil (20, 22, 60, 64) der Energiequelle als Ballastgewicht dient und in Fahrzeuglängsrichtung verschiebbar angeordnet ist.

2. Arbeitsfahrzeug nach Anspruch 1, **dadurch gekennzeichnet, daß** die elektrische Energiequelle einen Verbrennungsmotor (20) und einen mit dem Verbrennungsmotor (20) gekoppelten Generator (22) enthält.

3. Arbeitsfahrzeug nach Anspruch 1 oder 2, **dadurch gekennzeichnet, daß** die elektrische Energiequelle wenigstens eine Brennstoffzelle (60) enthält.

4. Arbeitsfahrzeug nach Anspruch 2 oder 3, **dadurch gekennzeichnet, daß** der Verbrennungsmotor (20) oder ein von der Brennstoffzelle (60) gespeister Elektromotor (64) ein mit einem Zapfwellenantrieb (32, 34, 36) in Verbindung stehendes Antriebsrad (24) antreibt.

5. Arbeitsfahrzeug nach einem der Ansprüche 1 bis 4, **dadurch gekennzeichnet, daß** die Energiequelle einen Zapfwellenantrieb (32, 34, 36) antreibt, der über zugehörige Zapfwellenkupplungen (38, 40) mit einer Frontzapfwelle (42) und/oder mit einer Heckzapfwelle (44) in Verbindung steht.

6. Arbeitsfahrzeug nach einem der Ansprüche 1 bis 5, **dadurch gekennzeichnet, daß** ein gegenüber dem Fahrzeugrumpf in Fahrzeuglängsrichtung verschiebbares Tragteil (16) vorgesehen ist, auf dem das wenigstens eine verschiebbare Bauteil (20, 22, 60, 64) der Energiequelle unmittelbar oder mittelbar montiert ist.

7. Arbeitsfahrzeug nach Anspruch 6, **dadurch gekennzeichnet, daß** das Tragteil im wesentlichen als im Querschnitt rechteckiges oder quadratisches Tragrohr (16) ausgebildet ist, das in einem entsprechenden fahrzeugfesten Führungsrohr (14) geführt ist.

8. Arbeitsfahrzeug nach Anspruch 6 oder 7, **dadurch gekennzeichnet, daß** am Tragteil (16), insbesondere im Bereich eines Endes des Tragteils (16), ein Getriebegehäuse (18) befestigt ist, an das der Verbrennungsmotor (20) und/oder der Generator (22) angeflanscht ist.

9. Arbeitsfahrzeug nach Anspruch 6 oder 7, **dadurch gekennzeichnet, daß** im Bereich eines Endes des Tragteils (16), insbesondere unter Zwischenschaltung eines Getriebegehäuses (18), eine Brennstoffzelle (60) und/oder ein durch die Brennstoffzelle (60) gespeister Elektromotor (64) montiert ist.

10. Arbeitsfahrzeug nach Anspruch 8 oder 9, **dadurch gekennzeichnet, daß** im Getriebegehäuse (18) ein Antriebsrad (24) gelagert ist, das antriebsmäßig mit der Kurbelwelle (26) des Verbrennungsmotors (20) oder mit der Ankerwelle eines durch die Brennstoffzelle (60) gespeisten Elektromotors (64) verbunden ist und das seinerseits ein mit einem Zapfwellenantrieb (32, 34, 36) verbundenes Abtriebsrad (30) und gegebenenfalls den Rotor (28) eines Generators (22) treibt.

11. Arbeitsfahrzeug nach einem der Ansprüche 6 bis 10, **dadurch gekennzeichnet, daß** an dem Tragteil (16) und/oder dem Getriebegehäuse (18) wenigstens ein Zusatzgewicht (23) befestigbar ist.

12. Arbeitsfahrzeug nach einem der Ansprüche 1 bis 11, **dadurch gekennzeichnet, daß** an dem Tragteil (16) und/oder dem Getriebegehäuse (18) eine den Verbrennungsmotor (20) oder die Brennstoffzelle (60) wenigstens teilweise abdeckende Abdeckhaube (46) befestigbar ist, welche sich mit einem fahrzeugfesten Haubenabschnitt (48) überlappt, um im gesamten Verschiebebereich des Tragteils (16) den Motorraum oder den Brennstoffzellenraum einzuschließen.

13. Arbeitsfahrzeug nach einem der Ansprüche 6 bis 12, **dadurch gekennzeichnet, daß** das Tragteil (16) hohl ausgebildet ist und daß sich innerhalb des Tragteils (16) ein teleskopierbarer Zapfwellenstrang (32, 34, 36) in Fahrzeuglängsrichtung erstreckt.

14. Arbeitsfahrzeug nach einem der Ansprüche 6 bis 13, **dadurch gekennzeichnet, daß** sich das Tragteil (16) um 0,5 m bis 1,5 m, vorzugsweise um etwa 1,0 m in Fahrzeuglängsrichtung verschieben läßt.

15. Arbeitsfahrzeug nach einem der Ansprüche 1 bis 14, **dadurch gekennzeichnet, daß** für die Verschiebung wenigstens ein hydraulisches oder elektrisches Stellglied (50) vorgesehen ist.

16. Arbeitsfahrzeug nach Anspruch 15, **dadurch gekennzeichnet, daß** das Stellglied (50) durch ein manuell einstellbares Steuersignal und/oder automatisch in Abhängigkeit der Fahrzeug- und/oder Achsbelastungen ansteuerbar ist.

17. Arbeitsfahrzeug nach einem der Ansprüche 1 bis 16, **dadurch gekennzeichnet, daß** eine adaptive Verschiebung so lange erfolgt, bis sich eine gewünschte, insbesondere voreinstellbare Achslastverteilung ergibt.

18. Arbeitsfahrzeug nach einem der Ansprüche 1 bis 17, **dadurch gekennzeichnet, daß** wenigstens den Rädern (10) einer Fahrzeugachse je ein durch die Energiequelle gespeister Elektromotor zugeordnet ist.

19. Arbeitsfahrzeug nach einem der Ansprüche 1 bis 18, **dadurch gekennzeichnet, daß** die Drehzahlen und/oder Radlasten und/oder Momente der das Arbeitsfahrzeug antreibenden Elektromotoren sensorlos erfaßt werden und daß in Abhängigkeit der erfaßten Werte der Verstellweg für die Verschiebung des als Ballastgewicht dienenden verschiebbaren Bauteils berechnet und eingestellt wird.

20. Arbeitsfahrzeug nach einem der Ansprüche 1 bis 19, **dadurch gekennzeichnet, daß** das Arbeitsfahrzeug ein Systemtraktor mit in etwa gleich großen Rädern (10) ist, dessen Kabine (12) in einer Mittenlage angeordnet ist.

## Claims

1. A utility vehicle, especially an agricultural tractor, with an electrical power source which feeds at least one electric motor driving the utility vehicle, **characterized in that** at least one component (20, 22, 60, 64) of the power source serves as a ballast weight and is arranged with the ability to be shifted in the vehicle longitudinal direction.

2. A utility vehicle according to claim 1, **characterized in that** the electrical power source includes an internal combustion engine (20) and a generator (22) coupled to the internal combustion engine (20).

3. A utility vehicle according to claim 1 or 2, **characterized in that** the electrical power source includes at least one fuel cell (60).

4. A utility vehicle according to claim 2 or 3, **characterized in that** the internal combustion engine (20) or an electric motor (64) supplied by the fuel cell (60) drives a drive gear (24) coupled to a PTO shaft drive (32, 34, 36).

5. A utility vehicle according to any of claims 1 to 4, **characterized in that** the power source drives a PTO shaft drive (32, 34, 36) which is coupled through associated PTO shaft clutches (38, 40) to a front PTO shaft (42) and/or a rear PTO shaft (44).

6. A utility vehicle according to any of claims 1 to 5, **characterized in that** a support part (16) which can shift relative to the rear of the vehicle in the vehicle longitudinal direction is provided and at least one component (20, 22, 60, 64) of the power source which can shift is mounted thereon directly or indirectly.

7. A utility vehicle according to claim 6, **characterized in that** the support part is formed essentially as a support tube (16) of rectangular or square cross-section and is guided in a corresponding guide tube (14) fixed to the vehicle.

8. A utility vehicle according to claim 6 or 7, **characterized in that** a transmission housing (18) is fixed on the support part (16), especially in the region of one end of the support part (16), and the internal combustion engine (20) and/or the generator (22) is flanged thereon.

9. A utility vehicle according to claim 6 or 7, **characterized in that** a fuel cell (60) and/or an electric motor (64) supplied by the fuel cell (60) is mounted in the region of one end of the support part (16), especially with interposition of a transmission housing (18).

10. A utility vehicle according to claim 8 or 9, **characterized in that** a drive gear (24) is mounted in the transmission housing (18) and is connected to be driven by the crankshaft (26) of the internal combustion engine (20) or by the armature shaft of an electric motor (64) supplied by the fuel cell (60) and for its part drives a drive gear (30) connected to the PTO shaft drive (32, 34, 36) and optionally the rotor (28) of a generator (22).

11. A utility vehicle according to any of claims 6 to 10, **characterized in that** at least one supplementary weight (23) can be fixed on the support part (16) and/or the transmission housing (18).

12. A utility vehicle according to any of claims 1 to 11, **characterized in that** a cover hood (46) at least partially covering the internal combustion engine (20) or the fuel cell (60) can be fixed on the support part (16) and/or the transmission housing (18) and overlaps a hood section (48) fixed to the vehicle in order to enclose the engine chamber or the fuel cell chamber over the whole range of displacement of the support part (16).

13. A utility vehicle according to any of claims 6 to 12, **characterized in that** the support part (16) is of hollow form and **in that** a telescopic PTO shaft train (32, 34, 36) extends in the vehicle longitudinal direction within the support part (16).

14. A utility vehicle according to any of claims 6 to 13, **characterized in that** the support part (16) can be shifted by about 0.5 m to 1.5 m, preferably by about 1.0 m in the vehicle longitudinal direction.

15. A utility vehicle according to any of claims 1 to 14, **characterized in that** at least one hydraulic or electric positioning member (50) is provided for the shifting.

16. A utility vehicle according to claim 15, **characterized in that** the positioning member (50) can be controlled by a manually adjustable control signal and/or automatically in dependence on the vehicle and/or axle load.

17. A utility vehicle according to any of claims 1 to 16, **characterized in that** an adaptive displacement takes place until a desired, especially pre-settable axle load distribution results.

18. A utility vehicle according to any of claims 1 to 17, **characterized in that** an electric motor supplied by the power source is associated at least with each of the wheels (10) of one vehicle axle.

19. A utility vehicle according to any of claims 1 to 18, **characterized in that** the speeds of rotation and/or wheel loads and/or moments of the electric motors driving the utility vehicle are detected without sensors and **in that** the path of displacement for the displacement of the component which can shift, serving as a ballast weight, is computed and adjusted in dependence on the detected values.

20. A utility vehicle according to any of claims 1 to 19, **characterized in that** the utility vehicle is a system tractor with wheels (10) approximately of the same size, whose cab (12) is arranged in a central position.

## Revendications

1. Véhicule utilitaire, en particulier tracteur agricole, comportant une source d'énergie électrique qui alimente au moins un moteur électrique entraînant le véhicule utilitaire, **caractérisé en ce qu'**au moins un élément structural (20, 22, 60, 64) de la source d'énergie sert de lest et est disposé de manière déplaçable dans la direction longitudinale du véhicule.

2. Véhicule utilitaire selon la revendication 1, **caractérisé en ce que** la source d'énergie électrique comporte un moteur à combustion (20) et un générateur (22) couplé au moteur à combustion (20).

3. Véhicule utilitaire selon la revendication 1 ou 2, **caractérisé en ce que** la source d'énergie électrique contient au moins une cellule à combustible (60).

4. Véhicule utilitaire selon la revendication 2 ou 3, **caractérisé en ce que** le moteur à combustion (20) ou un moteur électrique (64) alimenté par la cellule à combustible (60) entraîne une roue d'entraînement (24) reliée à un entraînement d'un arbre de prise de force (32, 34, 36).

5. Véhicule utilitaire selon l'une des revendications 1 à 4, **caractérisé en ce que** la source d'énergie entraîne un arbre de prise de force (32, 34, 36) qui est relié à un arbre à broches avant (42) ou un arbre à broches arrière (44) par l'intermédiaire d'embrayages correspondants (38, 40).

6. Véhicule utilitaire selon l'une des revendications 1 à 5, **caractérisé en ce qu'**il est prévu un élément porteur (16) déplaçable dans la direction longitudinale du véhicule vis-à-vis du corps du véhicule et sur lequel est monté directement ou indirectement au moins un élément structural déplaçable (20, 22, 60, 64) de la source d'énergie.

7. Véhicule utilitaire selon la revendication 6, **caractérisé en ce que** l'élément porteur consiste essentiellement en un tube porteur (16) à section transversale rectangulaire ou carrée qui est guidé dans un tube de guidage correspondant (14) solidaire du véhicule.

8. Véhicule utilitaire selon la revendication 6 ou 7, **caractérisé en ce que**, à l'élément porteur (16), en particulier dans la région d'une extrémité de l'élément porteur (16), est fixé un carter d'engrenages (18) auquel est accroché le moteur à combustion (20) et/ou le générateur (22).

9. Véhicule utilitaire selon la revendication 6 ou 7, **caractérisé en ce que** dans la région d'une extrémité de l'élément porteur (16), en particulier via un carter d'engrenages (18), est montée une cellule à combustible (60) et/ou un moteur électrique (64) alimenté par la cellule à combustible (60).

10. Véhicule utilitaire selon la revendication 8 ou 9, **caractérisé en ce que** dans le carter d'engrenages (18) est disposée une roue d'entraînement (24) qui est reliée au vilebrequin (26) du moteur à combustion (20) ou à l'arbre d'un moteur électrique (64) alimenté par la cellule à combustible (60) et qui, de son côté, entraîne une roue d'entraînement (30) reliée à un entraînement de prise de force (32, 34, 36) et le cas échéant le rotor (28) d'un générateur (22).

11. Véhicule utilitaire selon l'une des revendications 6 à 10, **caractérisé en ce qu'**à l'élément porteur (16) et/ou au carter d'engrenages (18) peut être fixé au moins un poids additionnel (23).

12. Véhicule utilitaire selon l'une des revendications 1 à 11, **caractérisé en ce qu'**à l'élément porteur (16) et/ou au carter d'engrenages (18) peut être fixé un capot de protection (46) recouvrant au moins en partie le moteur à combustion (20) ou de la cellule à combustible (60) et qui se superpose avec une section de capot (48) solidaire du véhicule de manière à enfermer dans la totalité de la zone de déplacement de l'élément porteur (16) l'espace du moteur ou l'espace de la cellule à combustible.

13. Véhicule utilitaire selon l'une des revendications 6 à 12, **caractérisé en ce que** l'élément porteur (16) est creux, et **en ce qu'**à l'intérieur de l'élément porteur (16) s'étend, dans la direction longitudinale du véhicule, un arbre de prise de force télescopique (32, 34, 36).

14. Véhicule utilitaire selon l'une des revendications 6 à 13, **caractérisé en ce que** l'élément porteur (16) est déplaçable de 0,5 m à 1,5 m de préférence d'environ 1,0 m dans la direction longitudinale du véhicule.

15. Véhicule utilitaire selon l'une des revendications 1 à 14, **caractérisé en ce que**, pour le déplacement, il est prévu au moins un organe de réglage hydraulique ou électrique (50).

16. Véhicule utilitaire selon la revendication 15, **caractérisé en ce que** l'organe de réglage (50) peut être commandé par un signal de commande envoyé manuellement et/ou automatiquement en fonction de la charge du véhicule et/ou de l'axe.

17. Véhicule utilitaire selon l'une des revendications 1 à 16, **caractérisé en ce qu'**un déplacement adaptatif intervient jusqu'à l'obtention d'une répartition de charges axiales souhaitée, et en particulier préréglée.

18. Véhicule utilitaire selon l'une des revendications 1 à 17, **caractérisé en ce qu'**au moins à chacune des roues (10) d'un l'axe du véhicule est associé un moteur électrique alimenté par la source d'énergie.

19. Véhicule utilitaire selon l'une des revendications 1 à 18, **caractérisé en ce que** la vitesse de rotation et/ou la charge des roues et/ou les moments des moteurs électriques entraînant le véhicule utilitaire sont saisis sans capteur, et **en ce que**, en fonction des valeurs saisies, le degré de réglage pour le déplacement de l'élément structural déplaçable servant de lest est calculé et fixé.

20. Véhicule utilitaire selon l'une des revendications 1 à 19, **caractérisé en ce que** le véhicule utilitaire est un tracteur du type à roues sensiblement de mêmes dimensions (10), dont la cabine (12) est placée en position médiane.
